# DEMANDE DE BREVET EUROPEEN

(11) **EP 2 255 871 A1**
(43) Date de publication de la demande: **01.12.2010**
(21) Numéro de dépôt: 10290269.9
(22) Date de dépôt: 21.05.2010
(51) Int. Cl.: B01J 19/08, C01B 31/02, C08J 7/12

(54) **Tapis de nanotubes de carbone**

(30) Priorité: 25.05.2009 FR 0902514
(71) Demandeur: Hutchinson, 75008 Paris (FR)
(72) Inventeur: Dieudonne, Marie, 45120 Chalette sur Loing (FR); Sonntag, Philippe, 77850 Hericy (FR); Zakri, Cécile, 33114 Le Barp (FR)
(74) Mandataire: Mena, Sandra

(57) **Abrégé**

L'invention concerne un procédé de préparation de tapis de nanotubes de carbone non poreux comprenant les étapes suivantes :
(i) dispersion des nanotubes de carbone dans une dispersion ou dans une solution de polymère, ladite dispersion ou solution de polymère étant constituée d'eau et/ ou de solvant organique,
(ii) application de la dispersion obtenue à l'étape (i) sur un substrat,
(iii) application d'un champ électrique ou d'un champ magnétique sur le film humide obtenu à l'étape (ii), les lignes dudit champ électrique ou dudit champ magnétique formant un angle compris entre 35° ± 15° et 90 ± 15° avec la surface du substrat,
et la dispersion de nanotubes de carbone étant exempte de particules magnétiques lorsque le champ appliqué est un champ magnétique.

Sont aussi concernés les tapis de nanotubes de carbone obtenus selon le procédé de l'invention, ainsi que les articles revêtus des tapis de nanotubes de l'invention.

## Description

La présente invention concerne un procédé spécifique de préparation de tapis de nanotubes de carbone exempt de pores ayant un diamètre supérieur à 50 nm, des tapis de nanotubes de carbone spécifiques pouvant être obtenus selon un tel procédé, ainsi que des articles revêtus de tels tapis de nanotubes de carbone.

Les nanotubes de carbone sont aujourd'hui de plus en plus utilisés pour leurs conductivités électrique et thermique remarquablement élevées, notamment dans des applications telles que le stockage d'espèces chimiques ou électriques. D'autre part, d'un point de vue mécanique, les nanotubes de carbone présentent l'avantage d'être rigides, tout en étant extrêmement légers.

La plupart des tapis de nanotubes de carbone décrits dans l'état de l'art antérieur présentent des nanotubes de carbone orientés perpendiculairement par rapport à la surface du substrat sur lequel ils sont appliqués, lesdits tapis de nanotubes de carbone étant préparés par évaporation thermique, ou par des méthodes chimiques comme le dépôt chimique en phase vapeur (méthode CVD), à partir de dépôts de particules de catalyseur. De tels procédés sont décrits dans WO 2007/ 124477 et WO 2007/047949. Toutefois, ces procédés nécessitent d'être mis en oeuvre à haute température. Ainsi, le substrat utilisé doit présenter une excellente tenue aux températures élevées, typiquement à des températures supérieures à 500°C. Ces exigences de procédé ne permettent donc pas la réalisation de tapis de nanotubes de carbone sur des substrats flexibles, tels que des polymères.

Un autre inconvénient des tapis de nanotubes de carbone obtenus selon les procédés de l'état de l'art est leur faible adhésion au substrat, lesdits tapis de nanotubes présentant une densité en nanotubes de carbone très élevées (10¹⁰ à 10¹¹ nanotubes de carbone/cm²), les nanotubes de carbone obtenus étant plutôt des microfibres de carbone de diamètre supérieur à 50 nm et de longueur supérieure à quelques microns.

Un autre inconvénient de ces méthodes résulte de la difficulté de travailler avec des nanotubes de carbone fonctionnalisés ou purifiés puisque la synthèse desdits nanotubes se fait directement sur le substrat.

JP 2004-234865 propose de remédier à ces inconvénients par la mise au point d'un procédé de préparation d'un film constitué d'un liant, de particules magnétiques et de nanotubes de carbone alignés verticalement sous l'action d'un champ magnétique, ledit procédé devant comprendre une étape supplémentaire d'élimination, soit par voie chimique, soit par voie physique, des particules magnétiques ajoutées. En effet, les particules magnétiques introduites sont rigides et conduisent, lors de l'application sur des substrats flexibles des dispersions les contenant, à l'apparition de trous (les trous étant formés lors de l'élimination des particules magnétiques), rendant ainsi la surface desdits substrats particulièrement poreuse. Ainsi, ledit procédé nécessite obligatoirement l'utilisation d'un substrat résistant aux attaques chimiques réalisées pour supprimer les particules magnétiques. De plus, l'existence de tels défauts affecte la résistance mécanique (la présence de trous induisant des amorces de fissures lors de l'utilisation), ainsi que les propriétés électrique et thermique des tapis de nanotubes de carbone obtenus, la présence de pores dégradant également les propriétés optiques desdits tapis, et plus particulièrement la transmittance, par diffusion de la lumière.

Ainsi, le problème technique restant à résoudre par rapport à cet état de l'art consiste en la mise au point d'un procédé de préparation de tapis de nanotubes de carbone exempt de pores ayant un diamètre supérieur à 50 nm, pouvant être mis en oeuvre à des températures peu élevées, de façon à permettre l'utilisation de substrats polymères, ledit procédé devant également être facilement industrialisable et peu coûteux, et les produits obtenus devant être d'excellente qualité, sans défaut de surface apparent.

Le procédé de préparation de tapis de nanotubes de carbone de l'invention, et les tapis de nanotubes de carbone susceptibles d'être obtenus par un tel procédé, proposent de remédier à tous ces inconvénients, en répondant de manière satisfaisante aux besoins et exigences suivantes :
- une excellente conductivité électrique transverse des tapis de nanotubes de carbone résultant du procédé de l'invention, comparée à celle des tapis de nanotubes de carbone obtenus par les procédés de l'état de l'art,
- un rapport élevé entre la conductivité électrique transverse et la conductivité électrique surfacique,
- l'obtention de tapis de nanotubes de carbone présentant une qualité satisfaisante, en termes d'absence de porosité et de défauts de surface, et présentant ainsi une excellente résistance physique et de bonnes propriétés mécaniques (notamment en terme d'élasticité),
- une application sur une plus grande variété de substrats, les procédés d'application des compositions de l'invention ne nécessitant pas de traitement thermique à haute température, et permettant ainsi également une application sur des substrats flexibles sensibles à la chaleur,
- une bonne adhésion des nanotubes de carbone sur le substrat, lesdits nanotubes de carbone étant « plantés » dans ledit substrat,
- une plus grande facilité de mise en oeuvre par rapport aux procédés connus de l'état de l'art, permettant notamment des dépôts sur de grandes surfaces, et
- des avantages économiques du fait de la réduction du nombre d'étapes de procédé.

Ainsi, par rapport aux procédés de préparation de tapis de nanotubes de carbone connus de l'art antérieur, le procédé de l'invention permet d'obtenir des tapis de nanotubes de carbone présentant un excellent compromis de performances, et ce grâce à une combinaison d'étapes spécifiques, ledit procédé comprenant notamment une étape, soit d'application d'un champ électrique, soit d'application d'un champ magnétique (sans ajout de particules magnétiques), dont les lignes de champ sont sensiblement perpendiculaires à la surface du substrat.

Aucun des procédés de préparation de tapis de nanotubes de carbone de l'état de l'art n'enseigne l'application d'un champ électrique pour obtenir des tapis de nanotubes de carbone présentant un tel compromis de performances.

Par rapport aux procédés de préparation de tapis de nanotubes de carbone connus, le procédé de l'invention faisant intervenir l'application d'un champ magnétique présente l'avantage de ne pas nécessiter l'ajout de particules magnétiques, ces dernières n'ayant pas à être supprimées ultérieurement par voie chimique ou physique. Ainsi, le procédé de l'invention peut être utilisé sur n'importe quel substrat, et plus particulièrement sur des substrats flexibles, sans en altérer les propriétés.

Ainsi, le premier objet de l'invention est donc un procédé de préparation d'un tapis de nanotubes de carbone exempt de pores ayant un diamètre supérieur à 50 nm comprenant une étape d'application d'un champ électrique ou d'un champ magnétique.

Un autre objet concerne un tapis de nanotubes de carbone spécifique exempt de pores ayant un diamètre supérieur à 50 nm susceptible d'être obtenu par un tel procédé.

Enfin, un dernier objet de l'invention est un article comportant au moins un substrat revêtu d'au moins un tapis de nanotubes de carbone selon l'invention.

Ainsi, le premier objet de la présente invention est un procédé de préparation d'un tapis de nanotubes de carbone exempt de pores ayant un diamètre supérieur à 50 nm, ledit procédé comprenant les étapes suivantes :
(i) dispersion des nanotubes de carbone dans une dispersion ou dans une solution de polymère, ladite dispersion ou solution de polymère étant constituée d'eau et/ou de solvant,
(ii) application de la dispersion obtenue à l'étape (i) sur un substrat,
(iii) application d'un champ électrique ou d'un champ magnétique sur le film humide obtenu à l'étape (ii), les lignes dudit champ devant être sensiblement perpendiculaires à la surface dudit substrat, ce qui signifie que les lignes dudit champ forment un angle compris entre 35 ± 15° et 90 ± 15° avec la surface du substrat,
(iv) optionnellement, abrasion de la surface du film obtenu à l'étape (iii), dans le but d'améliorer les propriétés des nanotubes de carbone,
(v) optionnellement, décollage du tapis de nanotubes de carbone obtenu à l'étape (iv) dudit substrat,
(vi) optionnellement, abrasion de la 2^{ème} face du tapis de nanotubes de carbone obtenu après l'étape (v) de décollage du tapis de nanotubes,
et à la condition que la dispersion de nanotubes de carbone soit exempte de particules magnétiques lorsque le champ appliqué est un champ magnétique.

Les nanotubes de carbone utilisés peuvent être des nanotubes mono-paroi (ou SWNT selon l'acronyme de l'expression anglaise « *Single-Walled Carbon Nanotubes* ») ou multi-parois (ou MWNT selon l'acronyme de l'expression anglaise « *Multi-Walled Carbon Nanotubes* »), purifiés ou non purifiés, fonctionnalisés ou non fonctionnalisés.

La structure d'un nanotube de carbone mono-paroi peut être représentée par un feuillet de graphène enroulé sur lui-même et fermé à ses deux extrémités par une demi-sphère. La façon dont le feuillet de graphène est replié sur lui-même définit un paramètre appelé hélicité, qui caractérise les différents types de structure de nanotubes de carbone existants.

La structure des nanotubes de carbone multi-parois peut, quant à elle, être représentée par plusieurs feuillets de graphène enroulés les uns autour des autres.

Les nanotubes de carbone de l'invention peuvent être obtenus selon n'importe quelle méthode de fabrication connue, telle que :
- la méthode par ablation laser, ce procédé de vaporisation consistant à ablater une cible de graphite avec un rayonnement laser de forte énergie pulsé ou continu, le graphite étant soit vaporisé, soit expulsé en petits fragments de quelques atomes,
- la méthode par dépôt chimique en phase vapeur (méthode CVD), qui consiste à ajouter à une source de carbone liquide, telle que du toluène, du benzène ou du cyclohexane, un précurseur métallique. La solution est alors transformée en fines gouttelettes transportées par un gaz inerte jusqu'à un four. Les nanotubes de carbone poussent alors, soit sur la paroi en verre du tube, soit sur une plaque de silicium. L'apport continu en réactifs oblige les nanotubes de carbone naissant à prendre le moins de place possible, et donc à tous s'aligner dans une même direction, verticalement, ce qui explique pourquoi on obtient des nanotubes de carbone alignés,
- l'ablation par arc électrique, qui consiste à former un arc électrique entre deux électrodes de graphite, l'anode se consumant pour former un plasma, et ce plasma se condensant sur la cathode en un dépôt caoutchouteux contenant les nanotubes de carbone.

Les nanotubes de carbone de l'invention peuvent se présenter soit sous forme individuelle, soit sous forme de fagots. De préférence, lesdits nanotubes de carbone ont une longueur comprise entre 20 nm et 1 mm, et un diamètre compris entre 0,5 et 50 nm. Ainsi, les nanotubes de carbone peuvent présenter une longueur extrêmement grande devant leur diamètre.

Les nanotubes de carbone de la présente invention peuvent être présents à un taux en poids compris entre 0,5 et 50%, et de préférence entre 0,5 et 10%, par rapport au poids total de matière sèche de ladite dispersion.

Lesdits nanotubes de carbone sont dispersés dans un polymère, ledit polymère étant en dispersion ou en solution dans de l'eau et/ou dans un solvant, et ledit polymère étant choisi en fonction des contraintes d'application finale visées.

Le polymère de l'invention peut être réticulable, et éventuellement être déjà partiellement ou totalement réticulé. Le système de réticulation utilisé peut être un système de vulcanisation au soufre, ou un système de réticulation à base de peroxyde, et éventuellement de soufre, ou bien une composition comprenant déjà des groupements thermo-réticulables. En présence de groupements carboxyliques, il est possible d'utiliser des ions divalents tels que les ions Zn²⁺ comme co-agents réticulants.

Le polymère de l'invention peut avantageusement être un élastomère. Ledit élastomère, également appelé polymère caoutchouc, peut être choisi parmi les caoutchoucs naturels, les polyisoprènes de synthèse, les copolymères isobutylène/isoprène qui incluent le butyle caoutchouc (butyl rubber), les copolymères butadiène/acrylonitrile, les terpolymères butadiène/acrylonitrile/acide méthacrylique, les polychloroprènes, les polyisobutènes, les copolymères styrène/butadiène carboxylés ou non carboxylés, les polyuréthanes, les polyesters vinyliques, ainsi que les polymères et copolymères dans lesquels l'unité de base est le butadiène ou un de ses dérivés, tels que l'isoprène ou le chloroprène. Les élastomères les plus préférés sont les copolymères isobutylène/isoprène et les copolymères butadiène / acrylonitrile.

La dispersion ou solution de polymère de l'invention peut également être constituée d'autres polymères, choisis parmi les polystyrènes, les élastomères thermoplastiques tels que les copolymères à blocs styréniques, les polyamides, les polyacétals, les polycarbonates, les polyéthers éthercétones (PEEK), les polysulfures, les polyacétates tels que ceux dérivants des monomères de type acétate de vinyle, les copolymères éthylène/acétate de vinyle, les polychlorures de vinyle, les polychlorures de vinylidène, les polymères époxys, les polymères acryliques tels que ceux dérivants des monomères d'esters d'acides (méth)acryliques, comme le polyméthacrylate de méthyle (PMMA) par exemple, et les polymères fluorés tels que le polyfluorure de vinylidène (PVDF). Les polymères les plus préférés sont les polymères fluorés, et encore plus préférentiellement le polyfluorure de vinylidène (PVDF).

Le polymère de l'invention est en dispersion ou en solution dans de l'eau et/ou dans un solvant, ledit solvant pouvant avantageusement être choisi parmi les solvants organiques polaires, tels que le diméthylsulfoxyde (DMSO), le N-méthyl-2-pyrrolidone (NMP), le diméthylformamide (DMF), le diméthylacétate (DMAc), l'éthylène glycol, l'acétone, les alcools tels que le méthanol, l'éthanol, le butanol et l'isopropanol, ou un mélange desdits solvants.

La concentration en matière active de la dispersion de nanotubes de carbone obtenue à l'étape (i) du procédé de l'invention, c'est-à-dire en matière sèche de nanotubes de carbone et de polymère, par rapport au total de solvant, est de préférence comprise entre 5 et 60%.

La dispersion de nanotubes de carbone obtenue à l'étape (i) du procédé de l'invention peut également être stabilisée par l'ajout d'au moins un tensioactif (L. Vaisman et al., The role of surfactants in dispersion of carbon nanotubes, Advances in Colloid and Interface Science, 128-130 (2006) 37-46). La présence du tensioactif permet d'éviter la formation de micro-agrégats de nanotubes de carbone. Le tensioactif choisi peut avantageusement être un tensioactif anionique ou un tensioactif non ionique. De préférence, ledit tensioactif est sélectionné parmi le dodécylsulfate de sodium (SDS), le dodécylbenzène sulfonate de sodium (DDBS), le bromure de cétyl-triméthyle ammonium (CTAB), les polyoxydes d'éthylène ayant 1 à 1000 motifs oxyéthylène (OE), les nonylphénols polyéthoxylés ayant 1 à 1000 motifs éthoxylés, les sels biliaires à base d'acide cholique et d'acide chénodéoxycholique tels que le cholate de sodium, l'ADN dénaturé, les copolymères blocs polyoxypropylène/polyoxyéthylène tels que le Pluronic^{®} F68 (BASF), et le polyvinylpyrrolidone (PVP), les tensioactifs les plus préférés étant le dodécylsulfate de sodium (SDS), le dodécylbenzène sulfonate de sodium (DDBS) et le cholate de sodium.

A noter que lorsque le procédé de l'invention fait intervenir dans son étape (iii) l'application d'un champ magnétique, alors la dispersion de l'invention préparée selon l'étape (i) est exempte de particules magnétiques.

La dispersion de l'invention obtenue à l'étape (i) est ensuite, dans une étape (ii), appliquée sur la surface d'un substrat selon n'importe quelle méthode d'application connue de l'homme de l'art, les techniques les plus utilisées étant le spray coating, le dépôt au jet d'encre, le dépôt au trempé, le dépôt au tire-film, le dépôt au spin-coater, le dépôt par slot-die, le dépôt par imprégnation, ou la flexogravure.

Ledit substrat peut être constitué d'un matériau choisi parmi le verre, le métal, la céramique, les matériaux conducteurs ou semi-conducteurs, et les polymères flexibles. Ces derniers peuvent être choisis en fonction de leur compatibilité avec les autres constituants de la dispersion, de leur facilité d'utilisation, et surtout en fonction des propriétés requises par l'application finale visées (tenue à des températures élevées, tenue au vieillissement...). Ainsi, les polymères flexibles sont de préférence choisis parmi le polyéthylène téréphtalate (PET), le polyéthylène naphtalate (PEN), le polyéthersulfone (PES), le polycarbonate (PC), le polysulfone (PSU), les résines phénoliques, les résines époxys, les polyesters, les polyimides, les polyétheresters, les polyétheramides, le polyvinyl(acétate), le nitrate de cellulose, l'acétate de cellulose, le polystyrène, les polyoléfines, le polyamide, les polyuréthanes aliphatiques, le polyacrylonitrile, le polytétrafluoroéthylène (PTFE), les fluorures de polyvinylidène, le polyméthyl méthacrylate (PMMA), les polyarylates, les polyétherimides, les polyéthers cétones (PEK), et les polyéthers éthercétones (PEEK).

Les nanotubes de carbone présents sont ensuite alignés sensiblement perpendiculairement à la surface du substrat, par application d'un champ électrique ou d'un champ magnétique. Les nanotubes de carbone apparaissent alors « plantés » dans la matrice polymère. L'expression « sensiblement perpendiculaire » signifie que l'angle directeur des nanotubes de carbone à la normale est compris entre 35° ± 15° et 90° ± 15° avec la surface du substrat. L'étape (iii) du procédé de l'invention consiste donc en l'application d'un champ électrique ou d'un champ magnétique sur le film humide obtenu à l'étape (ii), les lignes dudit champ électrique ou dudit champ magnétique appliqué étant sensiblement perpendiculaires à la surface dudit substrat.

Selon un mode de réalisation avantageux de l'invention, le champ appliqué à l'étape (iii) du procédé de l'invention est un champ électrique présentant une amplitude comprise entre 10 et 1000 kV/m, et de préférence entre 30 et 50 kV/m, à une fréquence supérieure à 1 kHz, et de préférence à une fréquence comprise entre 100 kHz et 100 MHz, avec ledit polymère présentant une rigidité diélectrique supérieure à celle du champ électrique appliqué. La rigidité diélectrique d'un milieu isolant représente la valeur maximale du champ électrique que le milieu peut supporter avant le déclenchement d'un arc électrique (et donc d'un court-circuit).

Selon un autre mode avantageux de l'invention, le champ appliqué à l'étape (iii) du procédé de l'invention est un champ magnétique présentant une amplitude supérieure à 0,3 Tesla, de préférence comprise entre 0,5 et 2 Tesla, et encore plus préférentiellement entre 0,75 et 1,5 Tesla, le polymère de l'invention devant être insensible au champ magnétique appliqué (matériau non ferromagnétique).

L'application du champ électrique ou du champ magnétique est de préférence réalisée pendant une durée comprise entre 5 secondes et 120 minutes, cette durée correspondant également au temps nécessaire à l'évaporation de l'eau et/ou du solvant, et donc au séchage du film.

L'étape (iv) d'abrasion consiste à enlever une partie du film sec obtenu à l'étape (iii), ladite abrasion pouvant être réalisée par attaque chimique, par abrasion mécanique, ou par abrasion par gravure.

Le critère d'arrêt de l'étape (iv) d'abrasion de la surface du film obtenu à l'étape (iii) est visuel par microscopie, ladite étape (iv) étant achevée lors de l'apparition des nanotubes de carbone, et donc lors de la formation du tapis de nanotubes de carbone de l'invention. L'apparition des nanotubes de carbone est observée par microscopie électronique à balayage (MEB), par microscopie à force atomique (AFM) ou par rugosimétrie.

Le procédé de l'invention peut également comprendre une étape supplémentaire (v) qui consiste à décoller le tapis de nanotubes de carbone obtenu à l'étape (iv) du substrat sur lequel il a été appliqué, la 2^{ème} face du tapis de nanotubes obtenu pouvant à son tour être abrasée lors d'une étape (vi).

Un objet supplémentaire de la présente invention est un tapis de nanotubes de carbone exempt de pores ayant un diamètre supérieur à 50 nm susceptible d'être obtenu par le procédé de l'invention tel que défini précédemment et présentant une conductivité électrique transverse comprise entre 0,5 µS/m et 10 mS/m, et de préférence entre 1 µS/m et 1 mS/m, lesdits nanotubes de carbone devant être alignés sensiblement perpendiculairement à la surface du substrat sur laquelle ils ont été appliqués. Ainsi, les nanotubes de carbone de l'invention sont « plantés » verticalement dans le polymère, suite à l'application d'un champ électrique ou d'un champ magnétique, telle que définie selon l'étape (iii) du procédé de l'invention, créant ainsi une très bonne adhésion entre les nanotubes de carbone et le substrat. Les nanotubes de carbone peuvent également être présents à l'intérieur de la matrice polymère, créant ainsi un réseau conducteur électrique et thermique. Ladite conductivité électrique transverse est mesurée selon la méthode exemplifiée ci-après dans la partie expérimentale.

Ledit tapis de nanotubes de carbone de l'invention peut avantageusement présenter une conductivité électrique surfacique comprise entre 1 Ω/□ et 1 MΩ/□, de préférence entre 1 Ω/□ et 10 kΩ/□, et encore plus préférentiellement entre 500 Ω/□ et 5 kΩ/□. Ladite conductivité électrique surfacique est mesurée selon la méthode exemplifiée ci-après dans la partie expérimentale.

La hauteur des nanotubes de carbone peut également varier en fonction de leur position à la surface du substrat, et n'est pas identique pour tous les nanotubes de carbone, contrairement aux tapis de nanotubes de carbone obtenus par des méthodes CVD.

De préférence, la densité des nanotubes de carbone à la surface des tapis de nanotubes de carbone est comprise entre 10 et 10⁵/cm².

Selon un mode de réalisation avantageux de l'invention, le tapis de nanotubes de carbone de l'invention est exempt de pores ayant un diamètre supérieur à 10 nm, et de préférence est exempt de pores ayant un diamètre supérieur à 5 nm.

De manière préférée, la longueur des nanotubes de carbone s'étendant à l'extérieur dudit tapis de nanotubes de carbone de l'invention est comprise entre 0,1 et 5 µm, cette longueur étant mesurée par microscopie électronique à balayage (MEB), par microscopie à force atomique (AFM) ou par rugosimétrie.

Selon un mode de réalisation alternatif, le tapis de nanotubes de carbone de l'invention peut présenter des nanotubes de carbone sur ses deux faces. Un tel tapis de nanotubes est obtenu par abrasion des deux faces de la surface du film obtenu à l'étape (iii) du procédé de l'invention.

Le tapis de nanotubes de carbone de l'invention peut présenter une épaisseur comprise entre 0,2 et 500 µm, et de préférence entre 0,5 et 150 µm.

Enfin, un dernier objet de l'invention concerne un article comportant au moins un substrat revêtu d'au moins un tapis de nanotubes de carbone tel que défini selon la présente invention, ledit substrat pouvant être tel que défini précédemment.

L'article tel que défini selon la présente invention peut être choisi parmi les électrodes de cellule photovoltaïque, les adhésifs secs, les tampons pour nano-impression et les capteurs.

Outre les dispositions qui précédent, l'invention comprend encore d'autres dispositions qui ressortiront du complément de description qui suit, qui se rapporte à des exemples mettant en évidence les excellentes propriétés des tapis de nanotubes de l'invention, ainsi qu'aux figures annexées dans lesquelles :

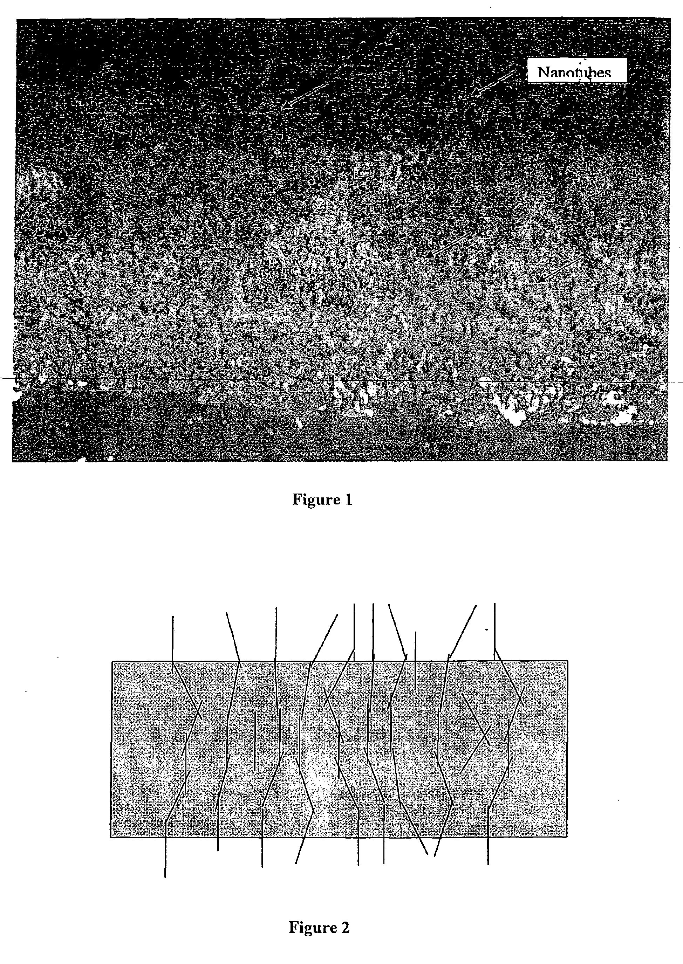

- la figure 1 représente un tapis de nanotubes de carbone alignés dans un élastomère NBR (acrylonitrile-butadiene rubber), sous l'influence d'un champ électrique (photo prise au microscope électronique à balayage LEO SUPRA 35), et
- la figure 2 représente un tapis de nanotubes de carbone selon l'invention dont les deux faces sont revêtues de nanotubes de carbone.

### I/ Matières premières

**Tableau I :**

| **Composé** | **Nature chimique** | **Fournisseur** |
|---|---|---|
| Nanotubes de carbone Nanocyl^{®} 7000 | Nanotubes de carbone | Nanocyl |
| Tensioactif SDS | Dodécylsulfate de sodium | Fluka |
| Synthomer 5130^{®} | Elastomère butadiène / acrylonitrile | Synthomer |

### II/ Méthodes de caractérisation

### 1- Mesure de la conductivité électrique surfacique

La conductivité électrique surfacique (en Ω/□) est mesurée à l'aide d'un appareil 4-pointes, modèle Lucas Lab système Pro4, avec un appareillage Keithley 2400 comme source de courant et mesure de tension.

L'appareillage est constitué de 4 pointes en tungstène équidistantes de 1,6 mm. Un courant I est injecté dans les pointes extérieures, et la tension V qui en résulte est mesurée sur les pointes intérieures.

On en déduit une valeur de conductivité surfacique Rs = 4,53 V/I.

### 2- Mesure de la conductivité électrique transverse

La conductivité électrique transverse (en µS/m) est mesurée par impédancemétrie (impédancemètre Hewlett-Packard 9104A), sous une fréquence de 100 kHz.

### Exemple 1 : exemple de l'invention

On réalise une dispersion de nanotubes de carbone dans de l'eau, ladite dispersion comprenant 60 mg de nanotubes de carbone Nanocyl^{®} 7000, 100 mg d'un tensioactif SDS et 10 mL d'eau.

Le mélange de nanotubes de carbone est ensuite refroidi dans un bain de glace, puis traité aux ultrasons dans un bain de glace (utilisation d'un sonicateur digital 400 W Branson^{®} et d'une sonde micropointe taraudée 3,2 mm).

Les paramètres de sonication sont les suivants :
- temps de sonication : 1 heure,
- amplitude : 30%,
- temps de pulsation des ultrasons : 0,5 seconde,
- intervalle entre 2 séries de pulsations : 0,2 seconde.

On prépare ensuite un mélange comprenant 66% en poids de la dispersion de nanotubes de carbone préparée précédemment, avec 34% en poids d'un latex NBR (acrylonitrile-butadiene rubber) Synthomer 5130^{®} ayant un extrait sec de 45,3%, à l'aide d'un agitateur magnétique pendant ½ heure.

A l'aide de la composition obtenue, on réalise un film sec de 30 µm d'épaisseur à l'aide d'un tire-film sur une plaque de verre.

Un champ électrique présentant une amplitude de 20 kV/m, et soumis à une fréquence de champ en courant alternatif de 10 MHz, est ensuite appliqué sur le film pendant une durée de 2 heures.

Le film obtenu est ensuite vulcanisé à l'étuve pendant 10 minutes, à une température de 150°C.

On réalise ensuite une abrasion de la surface du film obtenu par un traitement par plasma RF (radio-fréquence) (plasma 300 W, pendant une durée de 900 secondes, 71 sccm (standard cubic centimeter), 0,5 mbar, CF₄).

Les propriétés du tapis de nanotubes de carbone obtenu sont les suivantes :
- conductivité électrique surfacique : Rs = 1,5 kΩ/□,
- conductivité électrique transverse : σ = 1,5 µS/m.

### Exemple 2 : exemple de l'invention

On réalise une dispersion de nanotubes de carbone dans de l'eau, ladite dispersion comprenant 60 mg de nanotubes de carbone Nanocyl^{®} 7000, 100 mg d'un tensioactif SDS et 10 mL d'eau.

Le mélange de nanotubes de carbone est ensuite refroidi dans un bain de glace, puis traité aux ultrasons dans un bain de glace (utilisation d'un sonicateur digital 400 W Branson^{®} et d'une sonde micropointe).

Les paramètres de sonication sont les suivants :
- temps de sonication : 1 heure,
- amplitude : 30%,
- temps de pulsation des ultrasons : 0,5 seconde,
- intervalle entre 2 séries de pulsations : 0,2 seconde.

On prépare ensuite un mélange comprenant 66% en poids de la dispersion de nanotubes de carbone préparée précédemment, avec 34% en poids d'un latex NBR (acrylonitrile-butadiene rubber) Synthomer 5130^{®} ayant un extrait sec de 45,3%, à l'aide d'un agitateur magnétique pendant ½ heure.

A l'aide de la composition obtenue, on réalise un film sec de 60 µm d'épaisseur à l'aide d'un tire-film sur une plaque de verre.

Un champ magnétique présentant une amplitude de 0,5 Tesla est ensuite appliqué sur le film pendant une durée de 2 heures.

Le film obtenu est ensuite vulcanisé à l'étuve pendant 30 minutes sous champ magnétique, à une température de 150°C.

On réalise ensuite une abrasion de la surface du film obtenu par un traitement par plasma RF (radio-fréquence) (plasma 300 W, pendant une durée de 900 secondes, 71 sccm (standard cubic centimeter), CF₄).

Les propriétés du tapis de nanotubes de carbone obtenu sont les suivantes :
- conductivité électrique surfacique : Rs = 2,7 kΩ/□,
- conductivité électrique transverse : σ = 2,5 µS/m.

### Exemple 3 : exemple comparatif

On réalise une dispersion de nanotubes de carbone dans de l'eau, ladite dispersion comprenant 60 mg de nanotubes de carbone Nanocyl^{®} 7000, 100 mg d'un tensioactif SDS et 10 mL d'eau.

Le mélange de nanotubes de carbone est ensuite refroidi dans un bain de glace, puis traité aux ultrasons dans un bain de glace (utilisation d'un sonicateur digital 400 W Branson^{®}, et d'une sonde micropointe taraudée 3,2 mm).

Les paramètres de sonication sont les suivants :
- temps de sonication : 1 heure,
- amplitude : 30%,
- temps de pulsation des ultrasons : 0,5 seconde,
- intervalle entre 2 séries de pulsations : 0,2 seconde.

On prépare ensuite un mélange comprenant 66% en poids de la dispersion de nanotubes de carbone préparée précédemment, avec 34% en poids d'un latex NBR (acrylonitrile-butadiene rubber) Synthomer 5130^{®} ayant un extrait sec de 45,3%, à l'aide d'un agitateur magnétique pendant ½ heure.

A l'aide de la composition obtenue, on réalise un film sec de 30 µm d'épaisseur à l'aide d'un tire-film sur une plaque de verre.

Le film obtenu est ensuite vulcanisé à l'étuve pendant 10 minutes, à une température de 150°C.

On réalise ensuite une abrasion de la surface du film obtenu par un traitement par plasma RF (radio-fréquence) (plasma 300 W, pendant une durée de 180 secondes, 50 sccm (standard cubic centimeter), 0,5 mbar, CF₄).

Les propriétés du tapis de nanotubes de carbone obtenu sont les suivantes :
- conductivité électrique surfacique : Rs = 350 Ω/□,
- conductivité électrique transverse : σ = 0,1 µS/m.

## Revendications

1. Procédé de préparation d'un tapis de nanotubes de carbone exempt de pores ayant un diamètre supérieur à 50 nm, **caractérisé en ce qu'**il comprend les étapes suivantes :
(i) dispersion des nanotubes de carbone dans une dispersion ou dans une solution de polymère, ladite dispersion ou solution de polymère étant constituée d'eau et/ou de solvant,
(ii) application de la dispersion obtenue à l'étape (i) sur un substrat,
(iii) application d'un champ électrique ou d'un champ magnétique sur le film humide obtenu à l'étape (ii), les lignes dudit champ formant un angle compris entre 35° ± 15° et 90 ± 15° avec la surface du substrat,
et à la condition que la dispersion de nanotubes de carbone soit exempte de particules magnétiques lorsque le champ appliqué est un champ magnétique.

2. Procédé selon la revendication 1 **caractérisé en ce qu'**il comprend une étape (iv) supplémentaire :
(iv) abrasion de la surface du film obtenu à l'étape (iii).

3. Procédé selon l'une des revendications 1 ou 2 **caractérisé en ce qu'**il comprend une étape (v) supplémentaire :
(v) décollage du tapis de nanotubes de carbone obtenu à l'étape (iv) dudit substrat.

4. Procédé selon l'une des revendications 1 à 3 **caractérisé en ce qu'**il comprend une étape (vi) supplémentaire :
(vi) abrasion de la 2^{ème} face du tapis de nanotubes de carbone obtenu après l'étape (v) de décollage du tapis de nanotubes.

5. Procédé selon l'une des revendications 1 à 4 **caractérisé en ce que** la dispersion obtenue à l'étape (i) comprend en outre au moins un tensioactif, ledit tensioactif étant de préférence sélectionné parmi le dodécylsulfate de sodium (SDS), le dodécylbenzène sulfonate de sodium (DDBS) et le cholate de sodium.

6. Procédé selon l'une des revendications 1 à 5 **caractérisé en ce que** le polymère de l'étape (i) comprend au moins :
- un élastomère choisi parmi les caoutchoucs naturels, les polyisoprènes de synthèse, les copolymères isobutylène/isoprène qui incluent le butyle caoutchouc (butyl rubber), les copolymères butadiène/acrylonitrile, les terpolymères butadiène/acrylonitrile/acide méthacrylique, les polychloroprènes, les polyisobutènes, les copolymères styrène/butadiène carboxylés ou non carboxylés, les polyuréthanes, les polyesters vinyliques, ainsi que les polymères et copolymères dans lesquels l'unité de base est le butadiène ou un de ses dérivés, tels que l'isoprène ou le chloroprène, ledit élastomère étant de préférence choisi parmi les copolymères isobutylène/isoprène et les copolymères butadiène/acrylonitrile, ou
- un autre polymère choisi parmi les polystyrènes, les élastomères thermoplastiques tels que les copolymères à blocs styréniques, les polyamides, les polyacétals, les polycarbonates, les polyéthers éthercétones (PEEK), les polysulfures, les polyacétates tels que ceux dérivants des monomères de type acétate de vinyle, les copolymères éthylène/acétate de vinyle, les polychlorures de vinyle, les polychlorures de vinylidène, les polymères époxys, les polymères acryliques tels que ceux dérivants des monomères d'esters d'acides (méth)acryliques, comme le polyméthacrylate de méthyle (PMMA), et les polymères fluorés tels que le polyfluorure de vinylidène (PVDF), ledit polymère étant de préférence un polymère fluoré, et encore plus préférentiellement le polyfluorure de vinylidène (PVDF).

7. Procédé selon l'une des revendications 1 à 6 **caractérisé en ce que** le champ appliqué à l'étape (iii) est un champ électrique présentant une amplitude comprise entre 10 et 1000 kV/m, et de préférence entre 30 et 50 kV/m, à une fréquence supérieure à 1 kHz, et de préférence à une fréquence comprise entre 100 kHz et 100 MHz, avec ledit polymère présentant une rigidité diélectrique supérieure à celle du champ électrique appliqué.

8. Procédé selon l'une des revendications 1 à 6 **caractérisé en ce** le champ appliqué à l'étape (iii) est un champ magnétique présentant une amplitude supérieure à 0,3 Tesla, de préférence comprise entre 0,5 et 2 Tesla, et encore plus préférentiellement entre 0,75 et 1,5 Tesla, ledit polymère étant insensible au champ magnétique appliqué.

9. Procédé selon l'une des revendications 1 à 8 **caractérisé en ce que** l'étape (iii) d'application du champ électrique ou magnétique est réalisé pendant une durée comprise entre 5 secondes et 120 minutes.

10. Procédé selon l'une des revendications 1 à 9 **caractérisé en ce que** l'étape (iv) d'abrasion est réalisée par attaque chimique, par abrasion mécanique, ou par abrasion par gravure.

11. Tapis de nanotubes de carbone exempt de pores ayant un diamètre supérieur à 50 nm, susceptible d'être obtenu par un procédé tel que défini selon l'une des revendications 1 à 10, **caractérisé en ce qu'**il présente une conductivité électrique transverse comprise entre 0,5 µS/m et 10 mS/m, et de préférence entre 1 µS/m et 1 mS/m.

12. Tapis selon la revendication 11 **caractérisé en ce qu'**il présente une conductivité électrique surfacique comprise entre 1 Ω/□ et 1 MΩ/□, de préférence entre 1 Ω/□ et 10 kΩ/□, et encore plus préférentiellement entre 500 Ω/□ et 5 kΩ/□.

13. Tapis selon l'une des revendications 11 ou 12 **caractérisé en ce qu'**il est exempt de pores ayant un diamètre supérieur à 10 nm, et de préférence exempt de pores ayant un diamètre supérieur à 5 nm.

14. Tapis selon l'une des revendications 11 à 13 **caractérisé en ce que** la longueur des nanotubes de carbone s'étendant à l'extérieur dudit tapis est comprise entre 0,1 et 5 µm.

15. Tapis selon l'une des revendications 11 à 14 **caractérisé en ce qu'**il présente des nanotubes de carbone sur ses deux faces.

16. Tapis selon l'une des revendications 11 à 15 **caractérisé en ce qu'**il présente une épaisseur comprise entre 0,2 et 500 µm, et de préférence entre 0,5 et 150 µm.

17. Article **caractérisé en ce qu'**il comporte au moins un substrat revêtu d'au moins un tapis de nanotubes de carbone tel que défini selon l'une des revendications 11 à 16.

18. Article selon la revendication 17 **caractérisé en ce que** le substrat est choisi parmi le verre, le métal, la céramique, les matériaux conducteurs ou semi-conducteurs, et les polymères flexibles.

19. Article selon l'une des revendications 17 ou 18, **caractérisé en ce qu'**il est choisi parmi les électrodes de cellule photovoltaïque, les adhésifs secs, les tampons pour nano-impression et les capteurs.
